# EUROPEAN PATENT SPECIFICATION

(11) **EP 0 823 884 B1**
(45) Date of publication and mention of the grant of the patent: **19.09.2001**
(21) Application number: 96912024.5
(22) Date of filing: 17.04.1996
(51) Int. Cl.: C01B 39/28, C11D 3/12

(54) **SMALL PARTICLE SIZE P-TYPE ZEOLITE**
ZEOLITH DES TYPS P MIT KLEINER TEILCHENGRÖSSE
ZEOLITE DE TYPE P A PARTICULES DE PETITE TAILLE

(30) Priority: 01.05.1995 GB 9508821
(43) Date of publication of application: 18.02.1998
(73) Proprietor: INEOS Silicas Limited, Warrington WA5 1AB (GB)
(72) Inventor: ARTS, Theodorus, Johannes, Cornelis, NL-6215 GB Maastricht (NL); OSINGA, Theo, Jan, NL-6267 AN Cadier en Keer (NL)
(74) Representative: Jackson, John Derek
(86) International application number: EP9601645
(87) International publication number: WO9634828

(56) References cited:
- EP-A- 0 315 282
- EP-A- 0 357 989
- EP-A- 0 384 070
- EP-A- 0 565 364

## Description

### Field of the invention

The present invention relates to a process for manufacturing small particle size P-type zeolites.

### Background to the invention

Small particle size zeolites offer several potential benefits in detergent applications. More particularly based on the smaller particle size, dispersion of the zeolite in aqueous and non-aqueous liquids is superior. Suspension is faster and easier and the suspensions obtained are more stable. Such a benefit is for example disclosed in EP-B-315,282.

Now, in liquid detergents it is very difficult to include zeolites due to the risk of settling of the zeolite. Complex stabilisation systems, often based on surfactants and/or polymer systems, have to be included in the formulation to avoid settling of the zeolite in the liquid detergent product. In EP-A-357,989 are described such products. If the particles are extremely small, they can become small enough to give stable suspensions even without the addition of stabilizers. In that case, formulation of liquid detergent products becomes much more easy as there is no risk of settling.

In other respects, zeolites are supplied to the detergent manufacturer either as dry powder or as a highly concentrated slurry in an aqueous medium. The supply in slurry form is generally preferred when the detergent powder is produced in a spray-tower and the distance between zeolite producer and detergent manufacturer is less than approximately 500 km (for economic reasons: As long as the cost of drying exceeds the additional transport cost caused by the extra water in the slurry). Supply of zeolite in slurry form is also preferred when the zeolite is used in liquid detergent products, as in that application zeolite drying is definitely superfluous and as the production process for liquid detergents is facilitated, starting with a slurry. The supply of zeolite in slurry form is only realized by the addition of a stabilization system, e.g.: by addition of a nonionic surfactant or a polymer. The presence of a stabilizer in the zeolite slurry often represents a serious disadvantage to the detergent manufacturer, as it limits his freedom in formulating the detergent composition. It can even interfere with other components especially in liquid detergent compositions. Therefore, it is clear that small particle size zeolites allowing the production of stable slurries without the addition of stabilizing systems can offer great benefits.

Last but not least, there has been substantial debate about the possibility of settling of zeolite in sewer systems. Although there has not been any report of serious settling, it should be clear that the application of zeolites with extremely small particle size, that do not settle from aqueous suspensions, would further minimize this theoretical risk.

Zeolites used in detergent products i.e.: zeolite 4A and zeolite P are generally produced by mixing Sodium-silicate solution and Sodium-aluminate solution at temperatures between 50 °C and 90 °C forming an amorphous Sodium-aluminosilicate. During a further treatment at temperatures between 50 °C and 90 °C under alkaline conditions, the amorphous product crystallizes into the required zeolite form.

Zeolite 4A, thus produced and used in detergent products generally has an average particle size between 2 and 5 micrometers. Zeolite P, thus produced and applied in detergent applications and described in patent applications EP-A-384,070 and EP-A-565,364 has an average particle size between 0.7 and 1.5 micrometers (measured by a Sedigraph 5100), the smallest D50 figure effectively disclosed in these documents being 0.85 micrometers, no specific D90 figures being disclosed.

The zeolite P class includes a series of synthetic zeolite phases which may be in cubic configuration (also termed B or P_{c}) or tetragonal configuration (also termed P₁) but is not limited to these forms. The structure and characteristics of the zeolite P class are given in "Zeolite Molecular Sieves" of Donald W Breck (published 1974 and 1984 by Robert E Krieger of Florida USA). The zeolite P class has the typical oxide formula:

M_{2/n}O. Al₂O₃. 1.80 - 5.00 SiO₂. 5H₂O

M is an n-valent cation which for this invention is an alkali metal, that is lithium, potassium, sodium, caesium or rubidium with sodium and potassium being preferred and sodium being the cation normally used in commercial processes.

Thus sodium may be present as the major cation with another alkali metal present in a minor proportion to provide a specific benefit.

In the present invention crystalline P-zeolites having a Si:Al ratio from 0.9 to 1.33 are preferably used.

Although this already represents a very small particle size, there is still settling of at least a substantial part of this zeolite from suspensions during prolonged periods without stirring and without stabilisation by a stabilizing system as a part of the particles of this zeolite P are still too large.

It has already been proposed to reduce the particle size of a zeolite. Particle sizes can be reduced chemically or physically.

It is in principle feasible to reduce the particle size of zeolites by adjusting the precipitation conditions when reacting sodiumaluminate and sodiumsilicate as well as adjusting the crystallisation conditions. However it was found to be extremely difficult, if not impossible to produce a zeolite product without a substantial part of the particles being either too large or alternatively agglomerated during the crystallisation stage resulting in a final product having at least a part of the particles settling from suspensions during storage if not stirred or stabilized by the addition of stabilizing agents.

Particle size reduction via dry-milling is a well known technique. It can be realised in various ways, e.g.: in Ball-mills, Air-micronizers etc. It has been reported in the literature that dry-milling of various zeolites, including zeolite of the A type (as 4A, being the Na form of the A type zeolite) are not stable under the conditions prevailing during dry-milling. These crystalline zeolites gradually lose crystallinity during milling and also the ion-exchange capacity is reported to drop during milling (C. Kosanovic e.a., Zeolites 1995, 15 : page 247-252; Zeolites 1995, 15 : page 253-258 and Zeolites 1993, 13 : page 261 etc.).

These zeolites, losing crystallinity as well as exchange capacity on milling, all consist of single cell crystals with an average particle size above 2 micrometers (e.g.: between 2 and 8 micrometers), which are broken down to smaller particles, i.e.: around 1 micrometer.

In the European patent EP-B1-357989 zeolite 4A is claimed with following particle size distribution:
< 3.0 µm : 95 - 100 %
< 2.0 µm : 50- 85 %
< 1.5 µm : 10 - 30 %
< 1.0 µm : 0 - 4 %

The mean diameter (D50) being preferably 1.7 - 2.0 µm.

This claimed particle size distribution is obtained by dry-milling, i.e. in an air-jet mill (also called air-micronizer) of zeolite 4A with a mean particle size of 3.2 µm. In this document, it is also claimed, that more stable liquid detergent compositions can be produced using this smaller size 4A zeolite. However all these compositions still had to be stabilized using 20% surfactants as stabilizers, e.g.:
mixtures of Sodiumalkylbenzolsulphonate and C13-C15-oxoalcohol.

There is therefore a need for small particle size zeolites which still presents satisfactory detergent capacity (ion exchange capacity) and for a process which allows the production of said very small particle size zeolites.

It has now been discovered, in contradiction with the prior art teaching, that certain zeolites, when milled, present an ion exchange capacity which is actually increased.

### Tests and definitions

i) Particle size distribution
   Particle size distribution was measured using a Sedigraph Micromeritics 5100 equipment connected to a zenith computer. From is equipment it is possible to obtain more particularly the D50 and the D90 of the particle size distribution.
   (D50 = 50 wt. % of the particles below the diameter quoted)
   (D90 = 90 wt. % of the particles below the diameter quoted)
ii) pCa
   One of the important parameters of a zeolite in detergent applications is its capability of reducing the water hardness (e.g.: the calcium concentration) in the washing liquid.
   One method of expressing this capability is by adding a well defined quantity of zeolite to a well defined quantity of water of a well defined hardness (calcium concentration) and back-ground cation concentration and measuring the residual Ca concentration after 15 minutes in a clear solution obtained by filtering off of the zeolite.
   The calcium concentration can be measured by a ion-selective electrode and is expressed as pCa, being the negative logarithm of the Ca concentration. In this test 1.5 gramme zeolite (as 100 % bone dry), suspended in 50 ml. demineralized water is added to a solution in a 2 1. beaker glass, which is prepared as follows:
   50 ml. of a base solution, containing 7.9365 gramme CaCl₂.2H₂O and 25 gramme NaCl per 1., is added to 900 ml. demineralized water. The pH of this solution is brought up to 10.0 by addition a 5% Ammonia solution. After addition of the zeolite suspension, the mixture obtained is stirred for 15 minutes and then the zeolite is filtered off. The residual Ca concentration is measured in the filtrate.
   This measurement technique is considered to be more sensitive to small changes in zeolite structure than the well known measurement techniques for Ca uptake capacity, which only measure the maximum number of Sodium ions present in the zeolite, that can be exchanged. The pCa measurement also takes into account the selectivity of the zeolite for adsorption of Ca ions over Na ions, which is related to the relative strength of the Ca- and Na ion-binding, being related to the crystalline structure.
iii) Calcium effective binding capacity (CEBC):
   The CEBC was measured in the presence of a background electrolyte to provide a realistic indicator of calcium ion uptake in a wash liquor environment. A sample of each zeolite was first equilibrated to constant weight over saturated sodium chloride solution and the water content measured. Each equilibrated sample was dispersed in water (1cm³) in an amount corresponding to 1 g dm⁻³ (dry), and the resulting dispersion (1 cm³) was injected into a stirred solution, consisting of 0.01M NaCl solution (50 cm³) and 0.05M CaCl₂ (3.923 cm³), therefore producing a solution of total volume 54.923 cm³. This corresponded to a concentration of 200 mg CaO per litre, i.e. just greater than the theoretical maximum amount (197 mg) that can be taken up by a zeolite of Si : Al ratio 1.00. The change in the Ca²⁺ ion concentration was measured by using a Ca²⁺ ion selective electrode, the final reading being taken after 15 minutes. The temperature was maintained at 25° C throughout. The Ca²⁺ ion concentration measured was subtracted from the initial concentration, to give the effective calcium binding capacity of the zeolite sample as mg CaO/g zeolite.

### General description of the invention

It is an object of the present invention to provide a process for the production of a small particle zeolite P wherein the particle size of a zeolite is reduced by wet milling.

The small particle size P-type zeolite prepared according to the process of the invention preferably has a D50 of less than 0.8 µm, preferably less than 0.6 µm, and a D90 of less than 2.5 µm, preferably less than 2.0 µm, more preferably less than 1.5 µm.

Preferably the small particle size zeolite prepared according to the process of the invention present a Calcium Effective binding capacity of at least 155 mg CaO/g zeolite, more preferably at least 160 mg CaO/g zeolite.

The process is carried out in a Ball-Mill in which the space between the balls is filled with a suspension of the particles to be milled in a liquid medium, preferably an aqueous medium. The ball mill can be either shaken or rotated. The balls can also be moved within the ball-mill by a mixing device (e.g.: a rotating axis provided with plates).

The process can be carried out in a batchwise process in which the final particle size reached can generally be influenced by the size and density of the balls, the residence time as well as the energy input per volume.

Alternatively the process can be carried out in a continuous process in which the suspension is passed through the ball-mill e.g. in a ball mill with a rotating axis provided with plates as supplied by the firm Eiger.

Wet milling has advantages over dry-milling in many cases for following reasons:
- The process is generally more economic.
- Potential problems with dust are avoided.
- In case the product is primarily produced in a wet state and also used in a slurry or in any other wet form, the drying step can be omitted.
- As the liquor (e.g.: water) present acts as a cooling agent, possible product deterioration caused by (local) temperature increase caused by the shear during milling is minimised.

Moreover wet milling proved to produce zeolites having a much smaller particle size. Last but not least, zeolites are produced in an aqueous medium and in many applications also used in slurry form, e.g.: in Liquid detergents as well as in spray-dried detergent powders, the possibility to mill the zeolite in a slurry is therefore a further benefit to the process.

### Specific description of the invention

The present invention is further illustrated but not limited by the following examples.

### Example 1 (Comparative):

Milling tests, using an air-jet mill and starting with zeolite 4A with an original mean particle size (D50) of 2.8 µm. (measured in a Sedigraph), were carried out.

Following air-jet mill was used: Aeroplex-Fliessbett-Gegenstrahlmuehle 400 AFG of the firm Alpine, run at 6000 RPM with a throughput of 32 kg/h and an air flow of 766 Nm³/h. and an air overpressure before the nozzles of 6 Bar.

Surprisingly starting from a particle size distribution different from the one disclosed in EP-B1-357989, the particle size distribution reached was similar to that claimed in EP-B1-357989, i.e.:
< 3.0 µm. : 99 %
< 2.0 µm. : 58 %
< 1.0 µm. : 3 %

It tends to prove that dry milling appears to present a limit in its capacity to reduce the particle size.

### Example 2 (comparative)

In this example the size reduction is performed by wet-milling.

The wet-milling procedure was as follows:

A 250 ml. glass bottle is nearly completely filled with glass pearls. Zeolite and demineralized water are added to fill up the space in the bottle. The thus filled bottles are placed on a so called "Paint-Shaker (Fluid management Scandex SM-5)

The milling efficiency of this equipment is determined by the following parameters:
- Residence time.
- The diameter of the glass pearls,
- The zeolite/water ratio
- The weight ratio : glass pearls/zeolite

Following results were obtained using zeolite 4A having an average particle size of 3.19 µm.
(D50 = 50 wt. % of the particles below the diameter quoted) (D90 = 90 wt. % of the particles below the diameter quoted) The particle size distribution is measured on a Sedigraph. The starting material (zeolite 4A) had a D50 of 3.19 µm. and a D90 of 5.25 µm.

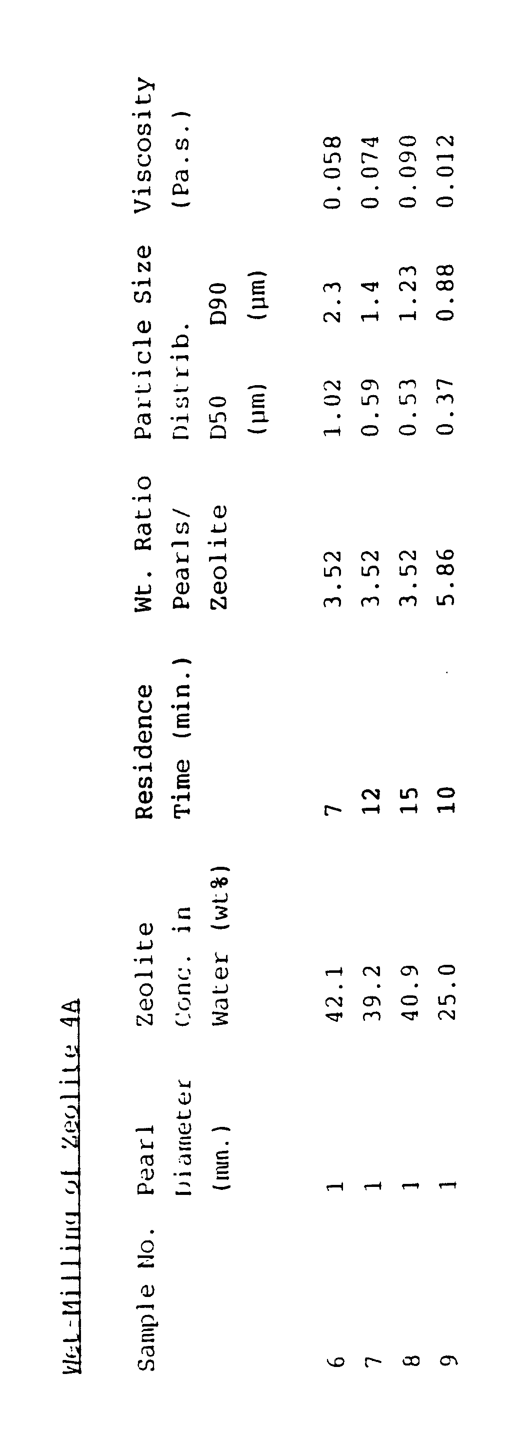

### Example 3:

The same tests as those performed in example 1 were carried out using a P-type zeolite having a SiO₂/Al₂O₃ ratio of 2 and produced according to the process disclosed in EP-A-565,364, in the same equipment using also 6000 RPM and 766 Nm³/h. and 6 Bar as well as 9 Bar. overpressure and 710 m³/h., realising following particle size distributions with following throughputs:

| | | | | | |
|---|---|---|---|---|---|
| Sample Nr.: | 1 | 2 | 3 | 4 | 5 |
| Overpressure: (Bar.) | 6 | 6 | 6 | 9 | 9 |
| Throughput : (Kg/h.) | 66.8 | 32 | 14 | 28 | 36 |
| | | | | | |
| < 0.5 µm. | 21,0 % | 25.0 % | 23.1 % | 19.5 % | 20.5 % |
| < 0.6 µm. | 36.3 % | 43.8 % | 42.4 % | 39.3 % | 41.4 % |
| < 0.8 µm. | 65.4 % | 73.0 % | 74.4 % | 71.0 % | 71.5 % |
| < 1.0 µm. | 81.3 % | 86.4 % | 89.7 % | 87.0 % | 85.8 % |
| < 1.5 µm. | 92.5 % | 96.0 % | 97.2 % | 95.9 % | 95.5 % |
| < 2.0 µm. | 96.2 % | 98.2 % | 98.6 % | 97.5 % | 97.7 % |
| < 3.0 µm. | 99.1 % | >99.5 % | >99.5 % | 99.5 % | 98.7 % |
| D50 | 0.69 µm. | 0.63 µm. | 0.64 µm. | 0.66 µm. | 0.65 µm. |

The starting material was a P-type zeolite, having a D50 of 1.07 µm. and a D90 of 3.97 µm.

These experiments surprisingly and clearly demonstrate, that using a P-type zeolite, dry milling becomes much easier and that much smaller particles can be obtained.

A possible explanation for this is that P-type zeolite, as disclosed in EP-B-384,070 and EP-A-565,364, has a basically different crystalline structure. The particles observed of around 0.8 µm to 2 µm do not consist of hard single crystals, but of agglomerates of extremely small primary particles with a particle size of 0.003 µm. to 0.03 µm. During milling these primary particles will not be affected but there will only be disintegration of the agglomerates to smaller agglomerates, which will be easier and also does not have an influence on the crystallinity as could be confirmed by X-Ray analysis.

It was demonstrated as discussed later (under example 5), that the better efficiency of milling P-type zeolite, without disrupting the crystallinity (structure of the primary crystals), has important benefits for the detergent applications, especially for Liquid Detergents.

### Example 4:

Following Example 2, P-type zeolite was milled in the same equipment as in Example 2.

The starting material had following particle size distribution: D50 : 1.07 µm. and D90: 3.97 µm.
This P-type zeolite suspended in water (45.6 wt.%) had a viscosity of 0.350 Pa.s.

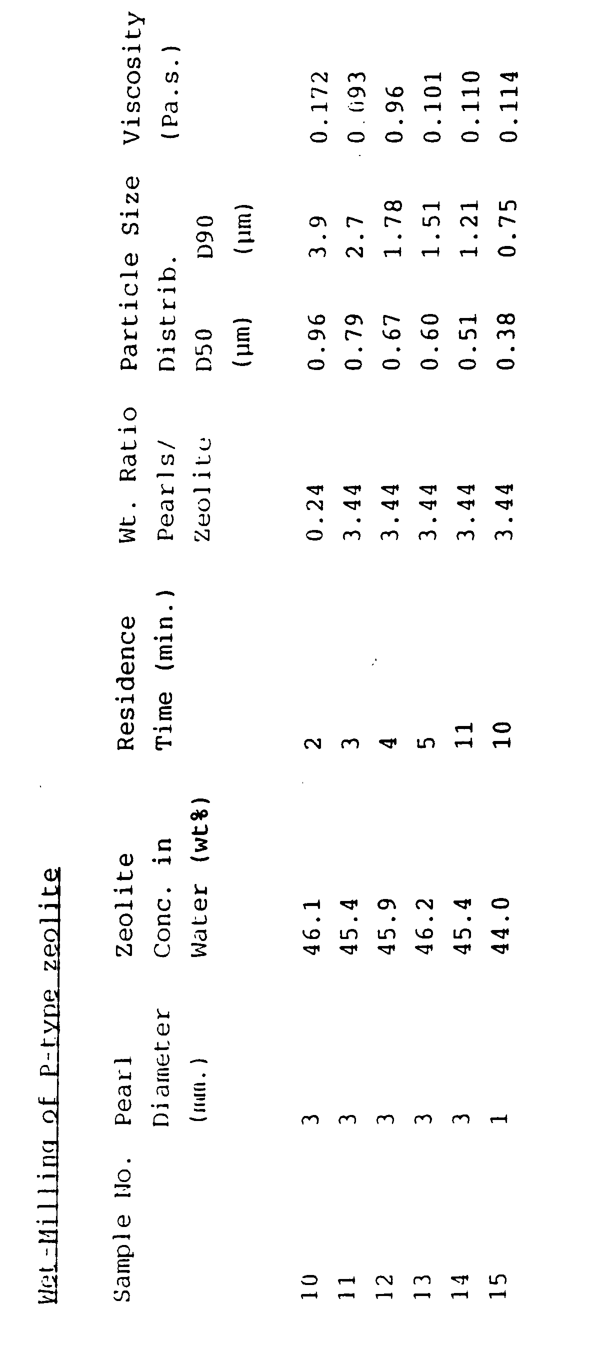

Surprisingly the particle sizes achieved were smaller than for dry-milling. As can be seen from samples 14 and 15 the use of smaller pearls improves milling efficiency. 3mm pearls were used for P-type zeolite in order to see the influence of residence time, which was not possible with 1 mm pearls, due to the better milling properties of P-type zeolite compared with 4A zeolite.

A remarkable improvement realised by wet milling over dry-milling is the reduction in larger particles. This is extremely important, as the stability of a suspension is primarily determined by the settling of the larger particles.

### Example 5

Here, the pCa of all the samples 1 to 15 obtained in examples 2 to 4 were measured, the results are reported here under. The sample numbers relate to the previously reported milling tests. The figures are also given before milling

| SAMPLE | zeolite A | | | |
|---|---|---|---|---|
| | Particle Size | | pCa | CEBC |
| | D50 (µm) | D90 (µm) | | |
| Before Milling | 3.19 | 5.25 | 4.00 | 142 |
| 6 | 1.02 | 2.3 | 3.80 | 138 |
| 7 | 0.59 | 1.4 | 3.80 | 134 |
| 8 | 0.53 | 1.23 | 3.80 | 126 |
| 9 | 0.37 | 0.88 | 3.80 | 136 |

| SAMPLE | Zeolite P | | | |
|---|---|---|---|---|
| | Particle Size | | pCa | CEBC |
| | D50 (µm) | D90 (µm) | | |
| Before milling | 1.07 | 4.0 | 4.55 | 157 |
| 1 | 0.69 | 1.4 | 4.8 | 162 |
| 2 | 0.63 | 1.2 | 4.8 | 162 |
| 3 | 0.64 | 1.15 | 4.8 | 163 |
| 4 | 0.66 | 1.2 | 4.75 | 160 |
| 5 | 0.65 | 1.2 | 4.8 | 162 |
| 10 | 0.96 | 3.9 | 4.65 | 163 |
| 11 | 0.79 | 2.7 | 4.65 | 162 |
| 12 | 0.67 | 1.78 | 4.70 | 162 |
| 13 | 0.60 | 1.51 | 4.70 | 163 |
| 14 | 0.51 | 1.21 | 4.65 | 156 |
| 15 | 0.38 | 0.75 | 4.70 | 165 |

The results reported in this table clearly demonstrate, that milling of zeolite 4A has a negative influence on the pCa for zeolite 4A, in line with the reports on the negative influence on crystallinity in literature. However, milling has a positive effect on pCa for P-type zeolite. An explanation for this phenomenon could be better accessibility as a result of the smaller particles (agglomerates) of P-type zeolite.

The fact, that the original pCa is already higher for P-type zeolite is caused by the fact, that the selectivity of P-type zeolite for binding Ca over Na is already higher than for 4A zeolite. As a result of the combined effects of the better binding of P-type zeolite and the effect of milling, milled P-type zeolite results in a much lower residual Ca concentration than milled zeolite 4A i.e.: nearly a factor 10 lower (pCa = 4.7 against 3.8).

## Claims

1. A process for the production of small particle size P-type zeolite wherein the particle size is reduced by wet milling.

2. A process as claimed in Claim 1 in which the resulting particles have D50 of less than 0.8 µm and a D90 of less than 2.5 µm.

3. A process as claimed in Claim 1 or 2 in which the resulting particles have D50 of less than 0.6 µm.

4. A process as claimed in Claim 1 or 2 in which the resulting particles have D90 of less than 2.0 µm.

5. A process as claimed in Claim 1 or 2 in Which the resulting particles have D90 of less than 1.5 µm.

6. A process as claimed in any one of Claims 1 to 5 in which the resulting particles have a Calcium Effective Binding Capacity of at least 155 mg CaO/g zeolite.

7. A process as claimed in any one of Claims 1 to 5 in which the resulting particles have a Calcium Effective Binding Capacity of at least 160 mg CaO/g zeolite.

8. A process as claimed in any one of Claims 1 to 7 in which said small particles are produced by wet milling coarse P-type zeolite particles and the resulting small particles have a greater Calcium Effective Binding Capacity than said coarse particles.

9. A liquid detergent formulation incorporating small particle size P-type zeolite produced by the process as claimed in any one of Claims 1 to 8.

10. A liquid detergent formulation incorporating a slurry of small particle size P-type zeolite produced by wet milling large particle size P-type zeolite in an aqueous medium using the process claimed in any one of Claims 1 to 8.

## Patentansprüche

1. Verfahren zur Herstellung von P-Typ-Zeolith mit einer geringen Teilchengröße, bei dem die Teilchengröße durch Naßmahlen verringert wird.

2. Verfahren nach Anspruch 1, bei dem die erhaltenen Teilchen einen D50 von weniger als 0,8 *µ*m und einen D90 von weniger als 2,5 *µ*m aufweisen.

3. Verfahren nach Anspruch 1 oder 2, bei dem die erhaltenen Teilchen einen D50 von weniger als 0,6 *µ*m aufweisen.

4. Verfahren nach Anspruch 1 oder 2, bei dem die erhaltenen Teilchen einen D90 von weniger als 2,0 *µ*m aufweisen.

5. Verfahren nach Anspruch 1 oder 2, bei dem die erhaltenen Teilchen einen D90 von weniger als 1,5 *µ*m aufweisen.

6. Verfahren nach irgendeinem der Ansprüche 1 bis 5, bei dem die erhaltenen Teilchen eine effektive Calcium-Bindungskapazität von wenigstens 155 mg CaO/g Zeolith aufweisen.

7. Verfahren nach irgendeinem der Ansprüche 1 bis 5, bei dem die erhaltenen Teilchen eine effektive Calcium-Bindungskapazität von wenigstens 160 mg CaO/g Zeolith aufweisen.

8. Verfahren nach irgendeinem der Ansprüche 1 bis 7, bei dem die genannten kleinen Teilchen durch Naßmahlen von groben P-Typ-Zeolith-Teilchen hergestellt werden und die erhaltenen kleinen Teilchen eine größere effektive Calcium-Bindungskapazität aufweisen als die genannten groben Teilchen.

9. Flüssige Waschmittel-Formulierung, die P-Typ-Zeolith mit einer geringen Teilchengröße enthält, der nach dem Verfahren nach einem der Ansprüche 1 bis 8 hergestellt wurde.

10. Flüssige Waschmittel-Formulierung, die eine Aufschlämmung von P-Typ-Zeolith einer geringen Teilchengröße enthält, die durch Naßmahlen von P-Typ-Zeolith einer großen Teilchengröße in einem wässrigen Medium unter Anwendung des Verfahrens nach irgendeinem der Ansprüche 1 bis 8 hergestellt wurde.

## Revendications

1. Procédé pour la production de zéolite de type P à particules de petite taille dans lequel la taille des particules est réduite par broyage humide.

2. Procédé selon la revendication 1 dans lequel les particules résultantes ont un D50 de moins de 0,8 µm et un D90 de moins de 2,5 µm.

3. Procédé selon la revendication 1 ou 2 dans lequel les particules résultantes ont un D50 de moins de 0,6 µm.

4. Procédé selon la revendication 1 ou 2 dans lequel les particules résultantes ont un D90 de moins de 2,0 µm.

5. Procédé selon la revendication 1 ou 2 dans lequel les particules résultantes ont un D90 de moins de 1,5 µm.

6. Procédé selon l'une quelconque des revendications 1 à 5 dans lequel les particules résultantes ont une capacité de liaison efficace du calcium d'au moins de 155 mg CaO/g zéolite.

7. Procédé selon l'une quelconque des revendications 1 à 5 dans lequel les particules résultantes ont une capacité de liaison efficace du calcium d'au moins de 160 mg CaO/g zéolite.

8. Procédé selon l'une quelconque des revendications 1 à 7 dans lequel lesdites petites particules sont produites par broyage humide des particules grossières de zéolite de type P et les petites particules résultantes ont une capacité de liaison efficace du calcium plus grande que lesdites particules grossières.

9. Formulation de détergent liquide incorporant de la zéolite de type P à petites particules produite par le procédé revendiqué dans l'une quelconque des revendications 1 à 8.

10. Formulation de détergent liquide incorporant une suspension de zéolite de type P à petites particules produite par broyage humide d'une zéolite de type P à particules de grande taille dans un milieu aqueux en utilisant le procédé revendiqué dans l'une quelconque des revendications 1 à 8.
